**Europäisches Patentamt**

**European Patent Office**

**Office européen des brevets**

(19)

(11) Veröffentlichungsnummer: **0 022 071**
**A1**

(12) # EUROPÄISCHE PATENTANMELDUNG

(21) Anmeldenummer: **80810186.9**

(22) Anmeldetag: **02.06.80**

(51) Int. Cl.³: **F 16 D 13/60**
**F 16 D 13/50, F 16 D 13/70**

(30) Priorität: **13.06.79 DE 2923887**

(43) Veröffentlichungstag der Anmeldung:
**07.01.81 Patentblatt 81/1**

(84) Benannte Vertragsstaaten:
**AT BE CH DE FR GB IT LI NL SE**

(71) Anmelder: **Schweizerische Aluminium AG**

**CH-8212 Neuhausen am Rheinfall(CH)**

(72) Erfinder: **Zulauf, Herbert**
**Kirchweg 47**
**CH-8245 Feuerthalen(CH)**

(54) **Reibungskupplung mit Kupplungsscheibe und Verfahren zu deren Herstellung.**

(57) Bei einer Reibungskupplung, welche eine Kupplungsscheibe 2 mit einer radialen Zahnung 25 aufweist sowie eine gegen diese im Bereich einer etwa ringförmigen Reibzone oder Reibfläche 11 führbaren Mitnehmerscheibe eines Antriebes, ist der Scheibenkörper der Kupplungseinheit auf dem Wege des Niederdruck-oder Druckgiessverfahrens aus Aluminium oder einer Aluminiumlegierung hergestellt und die Zahnung 25 als Zahnkranz 24 aus Stahl mit dem Scheibenkörper fest verbunden.

Die Reibfläche 11 ist dabei als Schicht aus Hartmetall, Aluminiumkeramik od. dgl. durch Plasma- oder Detonationsspritzen aufgebracht.

Der Zahnkranz 24 wird durch Bolzen 19 befestigt, welche gleichzeitig der Festlegung des Kupplungsgehäuses 15 dienen.

Fig. 2

- 1 -

Reibungskupplung mit Kupplungsscheibe und Verfahren zu deren Herstellung

Die Erfindung betrifft eine Reibungskupplung insbesondere für Kraftfahrzeuge mit Kupplungsgehäuse sowie wenigstens einer eine radiale Zahnung aufweisenden Kupplungsscheibe sowie einer gegen diese im Bereich einer ringförmigen Reibzone oder Reibfläche führbaren abtriebsseitigen Mitnehmerscheibe.

Bekannte Reibungskupplungen weisen eine Kupplungsscheibe bzw. ein Schwungrad und Kupplungsdruckplatten aus Grauguss auf, da dieser Werkstoff sich als guter Reibungspartner insbesondere für organische Gegenreibflächen erwiesen hat. Grauguss jedoch bringt ein hohes Gewicht mit sowie erhöhten Abrieb. Ausserdem sind zur Wärmespeicherung verhältnismässig grosse Volumina vonnöten. Als weiterer Nachteil hat sich herausgestellt, dass die zur Verbindung mit dem Anlasser erforderliche Randzahnung leicht ausbricht.

Angesichts dieser Gegebenheiten hat sich der Erfinder das Ziel gesetzt, eine Reibungskupplung der eingangs erwähnten Art zu schaffen, mit der Gewicht eingespart werden kann und welche dennoch gut funktionsfähig bleibt, vor allem eine ausreichend verschleissfeste Reibfläche besitzt sowie eine standfeste Randzahnung.

Zur Lösung dieser Aufgabe führt, dass der Scheibenkörper der Kupplungseinheit auf dem Wege des Niederdruck- oder Druckgiessverfahrens aus Aluminium oder einer Aluminiumlegierung hergestellt und die Zahnung als Zahnkranz aus Stahl mit dem Leichtmetallscheibenkörper fest verbunden ist. Zudem soll die Reibfläche aus Hartmetall, Aluminiumkeramik od. dgl. Werkstoff auf den Scheibenkörper aufgespritzt oder durch ein sogenanntes Coatingverfahren aufgebracht sein.

- 2 -

Da sich gezeigt hat, dass derartige Kupplungsscheiben nicht mehr die Aufgaben von Schwungscheiben erfüllen müssen, reicht der leichtgewichtige Scheibenkörper mit der innig aufgebrachten Reibfläche und dem rutschsicher befestigten Zahnkranz aus, die erforderlichen Funktionen zu übernehmen.

Dabei hat es sich als günstig erwiesen, dass die Reibfläche einen konzentrischen Nabenteil des Scheibenkörpers umgibt, der aus der Reibfläche entfernt liegenden Scheibenseite des Scheibenkörpers herausgeformt ist. Diese Formgebung hebt die Stabilität des Scheibenkörpers ebenso wie die Massgabe, dass in die Stirnseite des Scheibenkörpers wenigstens eine muldenartige Vertiefung eingeformt ist, deren Rückseite die Reibfläche aufweist. Zusätzlich kann die motorwärtige Seitenfläche des Scheibenkörpers radiale Rippen zwischen den Mulden aufweisen, welche auch der Wärmeleitung dienen.

Erfindungsgemäss wurde das Verbinden von Zahnkranz und Scheibenkörper so gelöst, dass mehrere Stehbolzen in den Zahnkranz eingeschraubt und umgossen werden, der Zahnkranz kann an seiner Kranzinnenseite zudem abgeschrägt und mit dieser Schrägseite einer hinterschnittenen Schulterfläche des Scheibenkörpers angefügt werden.

Im Rahmen der Erfindung liegt auch ein Verfahren zur Herstellung einer Kupplungsscheibe, wobei der Zahnkranz aus Stahl od. dgl. Werkstoff -- wie bereits erwähnt -- mit von seiner einen Seitenfläche abragenden Bolzen versehen und dann zumindest an der die Bolzen tragenden Seitenfläche auf dem Wege des Niederdruck- oder Druckgiessens der gleichzeitig entstehende Scheibenkörper angegossen wird. Die Haftung wird besonders intensiv, wenn zwischen dem Aluminium bzw. der Aluminiumlegierung des Scheibenkörpers einerseits und dem Metall des Zahnkranzes anderseits eine metallische Verbindung erzeugt wird.

- 3 -

Jene Bolzen ragen durch den angegossenen Scheibenkörper hindurch und dienen zum Aufschrauben des Kupplungsgehäuses. Beim Anbringen dieses Kupplungsgehäuses entsteht durch das Anzugsmoment beim Festschrauben eine hohe Flächenpressung, welche zusätzlich jegliche Art von Schlupf unterbindet.

Als vorteilhaft hat es sich erwiesen, dass der Zahnkranz während des Giessens durch Querschnittsvergrösserung zumindest teilweise eingegossen wird und/oder Speziallegierungen Verwendung finden, welche einer Stabilisierungsglühung unterzogen werden können.

Der Werkstoff der Reibfläche wird auf den Scheibenkörper elektrochemisch oder durch Plasma- bzw. Detonationsspritzen aufgebracht.

Dank der beschriebenen Massnahmen entsteht eine besonders leichte Kupplungsscheibe, welche dennoch allen mechanischen Belastungen in ausreichendem Masse Widerstand leistet. Von besonderer Bedeutung allerdings ist die Gewichtsminderung im Hinblick auf die dadurch verursachte Einsparung von Treibstoff.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1:  eine schematisierte Schrägsicht auf eine teilweise auseinandergenommene Kupplung mit einer Kupplungsscheibe;

Fig. 2:  den vergrösserten Längsschnitt nach Linie II - II in Fig. 1 durch die Kupplungsscheibe;

Fig. 3:  die Draufsicht auf die Kupplungsscheibe mit einem Feld E, welches einen Teilschnitt nach Linie E - E der Fig. 2 wiedergibt.

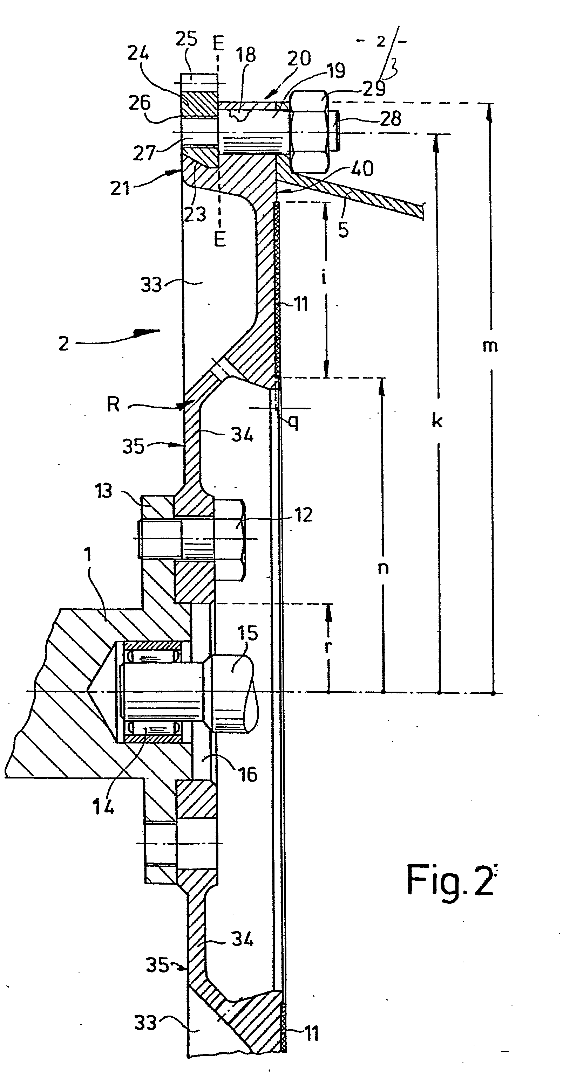

An der Kurbelwelle 1 (Fig. 2) eines in der Zeichnung nicht dargestellten Fahrzeugmotors sitzt eine Kupplungsscheibe 2 einer Kupplung 3, welche ausserdem eine Mitnehmerscheibe 4 ein Kupplungsgehäuse 5 und ein Ausrücklager 6 besitzt.

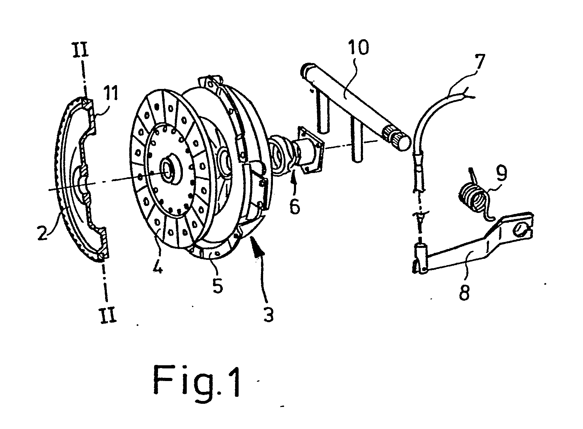

Zum Auskuppeln wird über einen in Fig. 1 erkennbaren Kupplungszug 7 ein Hebelarm 8 bewegt, der gegen die Kraft einer Rückzugfeder 9 eine Ausrückwelle 10 dreht. Diese presst jenes Ausrücklager 6 gegen übersichtigkeitshalber nicht dargestellte Federteile der Kupplung 3, um damit deren Federkraft zu übernehmen und die Mitnehmerscheibe 4 freizusetzen. In gekuppeltem Zustand wird die Mitnehmerscheibe 4 gegen eine Reibfläche 11 der Kupplungsscheibe 2 gepresst; die Breite i der Reibfläche 11 beträgt etwas mehr als 40 mm.

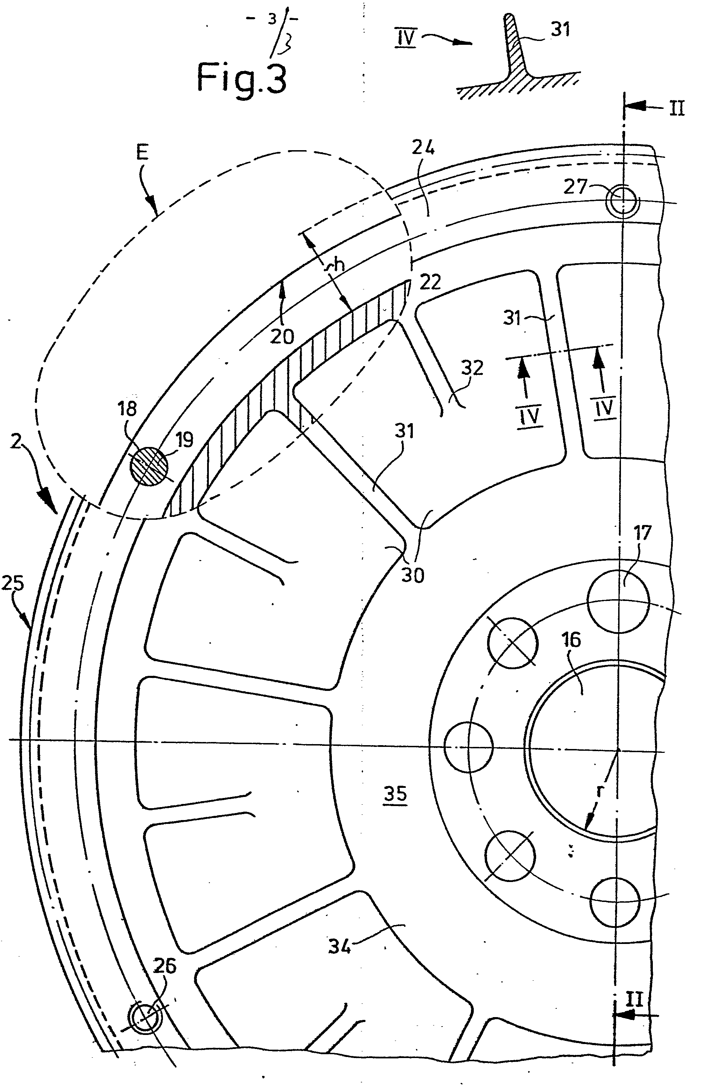

Bei der Herstellung der Kupplungsscheibe 2 wird der Zahnkranz 24 mit den Gewindebohrungen 26 versehen; in diese schraubt man die Gewindebolzen 19 ein umd umgiesst diese auf dem Wege des Niederdruck- oder Druckgiessverfahrens mit Aluminium unter gleichzeitiger Entstehung des Aluminiumkörpers der Kupplungsscheibe 2. Hierbei entstehen innerhalb des Zahnkranzes 24 in der Scheibenstirnseite 21 Mulden 30 (Fig. 3), die durch Rippen 31, 32 ganz bzw. teilweise unterbrochen sind. Bei dem Ausführungsbeispiel der Fig. 2 ist statt der nebeneinanderliegenden Mulden 30 ein umlaufender Muldenring 33 als einheitliche Aus- bzw. Einformung vorgesehen. Zwischen der zentrischen Scheibenausnehmung 16 einerseits und dem Muldenring 30, 33 anderseits ist der Scheibenkörper R zu einer nabenartigen Erhöhung 34 geformt, deren Aussenfläche 35 mit der Scheibenstirnseite 21 fluchtet.

Die Rückseite 40 der Kupplungsscheibe 2 trägt im Bereich der Mulden 30 bzw. des Muldenringes 33 -- und infolgedessen auf deren Rückseiten -- jene ringförmige Reibfläche 11 der Brei-

- 5 -

te i, deren Innenradius n 74 mm beträgt. Die Höhe dieser verschleissfesten Schicht 11 aus Aluminiumkeramik beträgt etwa 1 mm; diese Schicht wird nach Herstellung des Aluminiumkörpers auf dem Wege des sogenannten coating Spritzverfahrens aufgebracht.

Die Schraub- oder Stehbolzen 18 erzeugen zwischen dem Zahnkranz 24 und dem diesem angegossenen Aluminiumkörper R eine sichere haftfeste Verbindung. Zudem entsteht durch das Anzugsmoment beim Festschrauben des Kupplungsgehäuses 5 eine hohe Flächenpressung, welche einen Schlupf zusätzlich hintanhält.

Gemäss Fig. 2 ist die Kupplungsscheibe 2 mittels Schrauben 21 am Flansch 13 der Kurbelwelle 1 festgelegt; in letzterer ruht ein Lager 14 für eine Abtriebwelle 15; diese durchgreift eine zentrische Ausnehmung 16 vom Radius r (beispielsweise 21 mm), um welche kranzartig acht Bohrungen 17 für jene Schrauben 12 angeordnet sind.

Weitere sechs Bohrungen 18 sind in einem Kreis mit dem Radius k von beispielsweise 130 mm vorgesehen, welche das Durchführen von Schraubbolzen zum Festlegen des Kupplungsgehäuses 5 erlauben. Diese Bohrungen 18 sind nahe dem Scheibenumfang 20 angebracht, dessen Radius m etwa 140 mm beträgt.

An der gehäusefernen Seite 21 der Kupplungsscheibe 2 ist ein vom Scheibenumfang 20 ausgehender schulterartiger Absatz 22 vorgesehen mit hinterschnitten geneigter Schulterfläche 23. In diesem Absatz 22 sitzt ein Stahlring als Zahnkranz 24 mit radial abstehender Zahnung 25. Letztere kämmt im Betriebszustand mit dem Ritzel des Anlassers (nicht dargestellt).

Der Zahnkranz 24 von maximaler Höhe h (Fig. 3) weist Gewindebohrungen 26 auf, welche mit jenen Bohrungen 18 der Kupplungsscheibe 2 fluchten und die Gewindeenden 27 der eingesetzten Gewindebolzen 19 aufnehmen; auf deren aus der Kupplungsscheibe 2 ragenden Schraubenden 28 wird mittels Mutter 29 das Kupplungsgehäuse befestigt.

Im Rahmen der Erfindung kann auch liegen, dass beim Herstellen der Kupplungsscheibe 2 die Gewinde- oder Stehbolzen 19 des Zahnkranzes 24 in einen vorgefertigten Aluminiumkörper R mit ausreichend aufgeweiteten Bohrungen 18 eingebracht und dann in diesen die Stehbolzen 19 sowie an den Scheibenumfang 20 der Zahnkranz 24 angegossen werden.

<u>Patentansprüche</u>

1. Reibungskupplung insbesondere für Kraftfahrzeuge mit Kupplungsgehäuse sowie wenigsten einer eine radiale Zahnung aufweisenden antriebsseitigen Kupplungsscheibe sowie einer gegen diese im Bereich einer etwa ringförmigen Reibzone oder Reibfläche führbaren Mitnehmerscheibe eines Abtriebes,

dadurch gekennzeichnet,

dass der Scheibenkörper (R) der Kupplungseinheit (2) auf dem Wege des Niederdruck- oder Druckgiessverfahrens aus Aluminium oder einer Aluminiumlegierung hergestellt und die Zahnung (25) als Zahnkranz (24) aus Stahl mit dem Scheibenkörper fest verbunden ist.

2. Kupplung nach Anspruch 1, dadurch gekennzeichnet, dass die Reibfläche (11) als Schicht aus Hartmetall, Aluminiumkeramik od. dgl. auf den Scheibenkörper (R) aufgespritzt oder durch ein sogenanntes Coatingverfahren aufgebracht ist.

3. Kupplung nach Anspruch 2, dadurch gekennzeichnet, dass die Reibfläche (11) einen konzentrischen Nabenteil (34) des Scheibenkörpers (R) umgibt, der aus der von der Reibfläche entfernt liegenden Scheibenseite (40) des Scheibenkörpers herausgeformt ist und die antriebsseitige Fläche (35) des Nabenteiles (34) etwa in der Ebene der Aussenfläche des Zahnkranzes (24) und damit der einen Stirnseite (21) des Scheibenkörpers (R) liegt.

4. Kupplung nach Anspruch 2 und 3, dadurch gekennzeichnet, dass in die Stirnseite (21) des Scheibenkörpers (R) wenigstens eine muldenartige Vertiefung (30, 33) eingeformt ist, deren Rückseite die Reibfläche (11) aufweist.

5. Kupplung nach Anspruch 4, dadurch gekennzeichnet, dass die antriebswärtige Stirnseite (21) des Scheibenkörpers (R) radiale Rippen (31, 32) zwischen den muldenartigen Vertiefungen (30) aufweist.

6. Kupplung nach wenigstens einem der Ansprüche 1 bis 5, dadurch gekennzeichnet, dass der Zahnkranz (24) an seiner Kranzinnenseite abgeschrägt ist und diese Kranzinnenseite einer hinterschnittenen Schulterfläche (23) des Scheibenkörpers (R) anliegt.

7. Kupplung nach Anspruch 1 oder 6, dadurch gekennzeichnet, dass im Zahnkranz (24) gegebenenfalls lösbare Bolzen od. dgl. (19) festgelegt sind, welche den Scheibenkörper (R) nahe seines Umfanges (20) durchsetzen und ihn an seiner abgekehrten Stirnfläche (40) überragen, wobei der Bolzen (19) od. dgl. aus den ihn umgebenden Scheibenkörper (R) mit einem Schraubende (28) ragt und zur Festlegung des Kupplungsgehäuses (5) mit wenigstens einer Mutter (29) od. dgl. versehen ist.

8. Verfahren zum Herstellen einer Kupplungsscheibe nach wenigestens einem der Ansprüche 1 bis 7, dadurch gekennzeichnet, dass ein Zahnkranz (24) aus Stahl od. dgl. Werkstoff mit von seiner einen Seitenfläche abragenden Bolzen (19) versehen, und dass dann zumindest an der die Bolzen tragenden Seitenfläche auf dem Wege des Niederdruck- oder Druckgiessens ein gleichzeitig entstehender Scheibenkörper (R) angegossen wird, wobei gegebenenfalls ein metallischer Verbund erzeugt wird.

9. Verfahren nach Anspruch 8, dadurch gekennzeichnet, dass der Zahnkranz (24) während des Giessens durch Querschnittsvergrösserung zumindest teilweise eingegossen wird.

10. Verfahren nach einem der Ansprüche 8 oder 9, dadurch gekennzeichnet, dass auf den Scheibenkörper (R) wenigstens eine ringartige Fläche (11) aus Hartmetall, Aluminiumkeramik od. dgl. gegebenenfalls elektrochemisch oder durch Plasma- bzw. Detonationsspritzen aufgebracht wird.

-1/3-

Fig.1

0022071

Fig.2

0022071

Fig.3

IV

31

II

E

24

h

20

22

31

32

18

19

IV

IV

2

31

30

25

17

16

35

r

34

26

II

0022071

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 584 718 (SCHIEFER) <br> * Spalten 1,2; Spalte 4, Zeilen 34-37 * | 1-3 |
| | -- | |
| | FR - A - 1 002 244 (L.E.M.) <br> * Insgesamt * | 1,6 |
| | -- | |
| | GB - A - 1 158 229 (G.M.H.) <br> * Figur 1 * | 3,4 |
| | -- | |
| A | FR - A - 2 336 862 (DUNLOP) | |
| A | FR - A - 1 516 916 (FERODO) | |
| | ---- | |

**KLASSIFIKATION DER ANMELDUNG (Int. Cl.3)**

F 16 D 13/60
        13/50
        13/70

**RECHERCHIERTE SACHGEBIETE (Int. Cl.3)**

F 16 D
F 16 H

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-09-1980 | ORTHLIEB |

EPA form 1503.1 06.78